# EUROPÄISCHE PATENTANMELDUNG

(11) **EP 0 794 339 A1**
(43) Veröffentlichungstag der Anmeldung: **10.09.1997**
(21) Anmeldenummer: 97102630.7
(22) Anmeldetag: 19.02.1997
(51) Int. Cl.: F16C 13/02, C23C 2/00, F16C 21/00

(54) **Lagerung von Rollen**

(30) Priorität: 06.03.1996 DE 19608673
(71) Anmelder: SKF GMBH, D-97421 Schweinfurt (DE); Thyssen Stahl Aktiengesellschaft, 47166 Duisburg (DE)
(72) Erfinder: Biendara, Dieter, 57413 Finnentrop (DE); Braszus, Torsten, 97464 Niederwerrn (DE); Heeg, Thoralf, 57439 Attendorn (DE); Heiler, Hans-Joachim, 4744 Moers-Vinn (DE); Kaschube, Karl-Friedrich, 97464 Niederwerrn (DE); Schleuter, Horst, 46562 Voerde (DE); Winter, Heinrich, 97422 Schweinfurt (DE)
(74) Vertreter: Glanz, Werner

(57) **Zusammenfassung**

Bei der Lagerung einer Rolle für ein Schmelzmetallbad ist in Serie mit einem temperaturfesten Kugellager an jeder Seite ein Gleitlager 7, 9 angeordnet. Der Außenring 3 ist dabei auf Gleitlagerflächen drehbar gelagert. Dadurch kann sich bei kurzzeitig erhöhter Reibung im Kugellager der Außenring 3 schrittweise in Umfangsrichtung bewegen. Der unvermeidbare Verschleiß in der Hauptbelastungszone des Kugellagers wird damit auf ein erheblich größeres Verschleißvolumen über die gesamte Laufbahn des Außenringes 3 verteilt.

## Beschreibung

Durch das DE 93 01 764 ist es bereits bekannt, ein Kugellager mit Laufringen aus hitzebeständigem Stahl und Keramikkugeln für die Lagerung von Umlenkrollen in geschmolzenem Metall zu verwenden. Bei solchen Anwendungsfällen ist beispielsweise ein Bottich mit geschmolzenem Zink für die Verzinkung einer durchlaufenden Blechbahn vorgesehen. Diese wird über eine im mehr als 400 Grad Celsius heißen Zinkbad angeordnete Rolle umgeleitet. Sie ist an einem Gestellrahmen aufgehängt und über die genannten Kugellager an den Wellenenden drehbar gelagert. Das aggressive, geschmolzene Zinkbad umspült praktisch das gesamte Lager, da eine zuverlässige Abdichtung bei dieser Temperatur und diesem Medium nicht möglich ist. Dabei ergibt sich ein nicht zu vermeidender Verschleiß insbesondere an den Laufbahnen der Laufringe aus Stahl. Die Verwendung von Keramikwerkstoffen auch für die Laufringe scheidet meist aus, da mit hohen Kosten und insbesondere mit Zerstörung des stark bruchgefährdeten, spröden Keramikwerkstoffes gerechnet werden muß. Aus diesen Gründen bildet die Konstruktion hitzebeständiger Stahllaufringe und Keramikkugeln noch die optimale Lösung. Jedoch steht bei dieser stets der Wunsch nach einer Verlängerung der Lebensdauer im Vordergrund.

Aufgabe der Erfindung ist es, die Lagerung der eingangs genannten Art so zu verbessern, daß im Sinne einer längeren Lebensdauer der Verschleiß insbesondere an den Laufringen reduziert wird.

Die Aufgabe wird gelöst durch die Anordnung von Gleitlagern zwischen dem Außenring und dem Tragrahmen oder dgl.

Das Gleitlager ist dabei in Serie mit dem Wälzlager geschaltet, so daß der Außenring die Möglichkeit hat, sich zu drehen. Unter normalen Bedingungen besteht jedoch bei der gegenüber der Rollreibung höheren Haftreibung an den Gleitstellen keine Aussicht, daß der Außenring zu Drehbewegungen angeregt wird. Bei vorliegendem Anwendungsfall aber kommt es bei Störungen in der Kontinuität des Durchlaufes des Blechbandes, bei Partikel-Ablagerungen aus dem Metallschmelzbad an den Laufbahnen oder durch stetige Abnutzung des Außenringes in der Hauptlastzone zu zeitweisen impulsartigen Umfangskräften auf den Außenring. Dieser wird dabei um einen geringen Betrag gedreht. Das erfindungsgemäße Gleitlager gibt ihm dabei diese Möglichkeit. Wenn auch in kleinen Winkelschritten und in undefinierbaren Intervallen, aber dennoch zuverlässig wird dabei der unumgängliche Verschleiß in der Hauptlastzone auf den gesamten Umfang des Außenringes verteilt. Die bisher statische Hauptlastzone von beispielsweise 60 Grad Umfangswinkel wird bei der erfindungsgemäßen Lösung in Schritten über den gesamten Umfang verschoben. Dabei ergibt sich theoretisch eine sechsfache Lebensdauer des Außenringes. Da das Laufbahnprofil des Außenringes nunmehr über längere Zeit geringerem Verschleiß ausgesetzt ist, ergibt sich damit eine bessere Kugelführung in der Laufbahn, wovon auch der Innenring profitiert. Dessen Lebensdauer erhöht sich demzufolge.

Das Gleitlager ist für den genannten Anwendungsfall preisgünstig herzustellen und kann beispielsweise aus einigen Gleitlagerschuhen bestehen, auf denen der Außenring ruht bzw. gleitet.

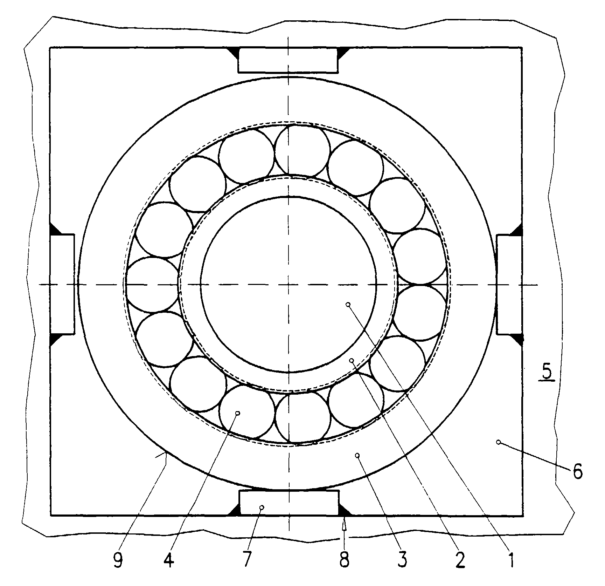

Diese und weitere Merkmale werden nachfolgend an dem in der Zeichnung dargestellten Beispiel beschrieben.

Die einzige Figur zeigt die Seitenansicht einer Rolle für ein Zinkbad mit Kugellager-Gleitlager-Kombination.

Die Darstellung ist stark vereinfacht und zeigt lediglich die erfindungsgemäßen Merkmale.

Die Rolle weist, wie nicht im einzelnen dargestellt, beiderseits identische Lager-Kombinationen auf Die gesamte Anordnung arbeitet in einem nicht gezeigten Zinkbad, so daß die Lager mit flüssigem Zink umspült sind.

Auf den Rollenzapfen 1 gemäß Figur ist ein Kugellager aufgesetzt, das aus Laufringen 2, 3 aus hitzebeständigem Stahl und Keramikkugeln 4 besteht. Während der Innenring 2 auf dem Rollenzapfen 1 mit Festsitz angeordnet ist, bildet der Außenring 3 mit dem Tragrahmen 5 ein Gleitlager. Der Tragrahmen 5 weist dazu eine quadratische Ausnehmung 6 auf an deren Begrenzungsflächen diametral Gleitschuhe 7 aus Hartmetall durch Schweißpunkte 8 befestigt sind. Die Mantelfläche 9 des Außenringes 3 ist damit an vier Punkten gleitgelagert. Eine Drehbewegung des Außenringes 3 entsteht bei erhöhter Reibung im Kugellager durch äußere Einflüsse oder Verschleiß an den Laufringen 2, 3.

## Patentansprüche

1. Lagerung von Rollen in Schmelzmetallbädern mit temperaturfesten Kugellagern, gekennzeichnet durch die Anordnung von Gleitlagern (7, 9) zwischen den Außenringen (3) und dem Tragrahmen (5) oder dgl.

2. Lagerung nach Anspruch 1, gekennzeichnet durch mehrere am Umfang verteilte Gleitlagerstellen (7).

3. Lagerung nach Anspruch 1 oder 2, gekennzeichnet durch eine rahmenförmige Aufnahme mit vier Gleitlagerstellen (7).
